# EUROPEAN PATENT APPLICATION

(11) **EP 2 233 270 A1**
(43) Date of publication of application: **29.09.2010**
(21) Application number: 10153746.2
(22) Date of filing: 16.02.2010
(51) Int. Cl.: B29C 44/18, A63H 9/00, A01K 15/02

(54) **Inflatable dog toy**

(30) Priority: 23.03.2009 US 383345
(71) Applicant: Zhang, Wen, Nanjing Jiangsu 210012 (CN)
(72) Inventor: Zhang, Wen, Nanjing Jiangsu 210012 (CN)
(74) Representative: McKeown, Yvonne Mary

(57) **Abstract**

A method for rapidly producing and distributing a new toy comprises the steps of designing a new dog toy by defining the shape and dimension of an inflated pliable exterior cover (50); and, producing, as soon as the dog toy is designed, and without requiring the design and construction of a mold, at least one thousand units of said new dog toy in a single day by utilizing an expandable foam composition in the cover.

## Description

This invention relates to animal toys.

More particularly, the invention relates to a dog toy and a method of producing and distributing the same.

In a further respect, the invention relates to a foam filled toy that significantly, in comparison to the process of molding the toy, reduces the start up time and cost associated with producing the toy.

A variety of animal toys, including dog toys, have been produced for many years. One existing motivation is to improve methods of manufacturing and delivering toys. Although this motivation has existed for years, innovation in the production and distribution of dog toys appears, at best, slow, and new animal toys and manufacture and distribution methods that are successful in the market appear only intermittently.

Accordingly, it would be highly desirable to provide an improved animal toy and method to produce and distribute the toy.

These and other, further and more specific objects, of the invention will be apparent to those skilled in the art from the following detailed description thereof, when taken in conjunction with the drawings in which
Fig. 1 is a block flow diagram illustrating presently preferred embodiments of the invention;
Fig. 2 is a block flow diagram in combination with illustrations to further illustrate presently preferred embodiments of the invention;
Fig. 3 is a block diagram illustrating another embodiment of the invention; and
Fig. 4 is a block diagram illustrating still a further embodiment of the invention.

Briefly, in accordance with the invention, I provide an improved method for producing and distributing a dog toy. The method comprises the steps of defining the shape and dimension of an inflated pliable exterior cover; forming a substantially continuous pliable cover of a gas permeable fabric, the cover generally circumscribing and enclosing a volume of gas; forming an opening in the pliable cover; inserting an expendable foam composition in the hollow pliable cover; closing the opening such that the pliable cover extends substantially continuously around the expandable foam composition to produce an inflatable toy; compressing said toy into a deflated configuration; packaging in a shipping container the toy in the deflated configuration; shipping said container to a selected destination; expanding the foam composition to inflate the inflatable toy; packaging the inflated toy; delivering the packaged inflated toy to a distributor; and, selling said packaged inflated toy to an end user.

In another embodiment of the invention, I provide an improved method for rapidly producing and distributing a new toy. The method comprises the steps of designing a new dog toy by defining the shape and dimension of an inflated pliable exterior cover; producing, as soon as step (a) is completed and without requiring the design and construction of a mold, at least one thousand units of the new dog toy in a single day by, for each of said units, (i) forming a substantially continuous pliable cover of a gas permeable fabric, the cover generally circumscribing and enclosing a volume of gas, (ii) forming an opening in the pliable cover; (iii) inserting an expandable foam composition in the hollow pliable cover; (iv) closing the opening such that the pliable cover extends substantially continuously around the expandable foam composition to produce an inflatable toy; expanding the foam composition to inflate the pliable cover to produce an inflated toy; placing the inflated toys in at least one shipping container; shipping the container to a selected destination; delivering the inflated toys to a distributor; and, selling the inflated toys to at least one end user.

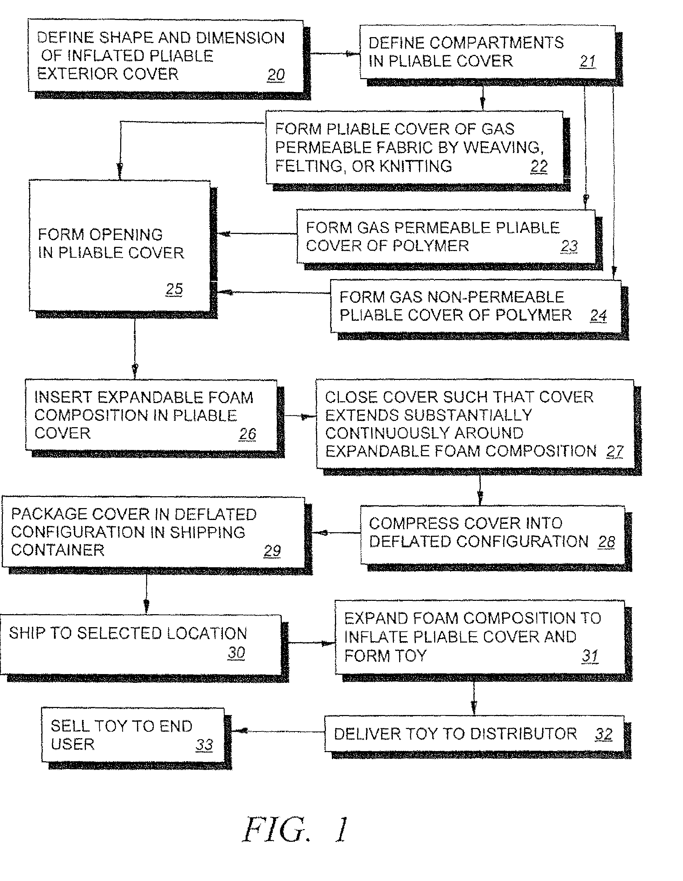

Turning now to the drawings, which illustrated the presently preferred embodiments of the invention for the purpose of illustrating the use thereof and not be way of limitation of the scope of the invention, and in which like reference character refer to corresponding elements throughout the several views, the method illustrated in Fig. 1 includes the step 20 of "define shape and dimension of inflated pliable exterior cover", step 21 of "define compartments in pliable cover", step 22 of "form pliable cover of gas permeable fabric by weaving, felting, or knitting", step 23 of "form gas permeable pliable cover of polymer", step 24 of "form gas non-permeable cover of polymer", step 26 of "insert expandable foam composition in pliable cover", step 27 of "close cover such that cover extends substantially continuously around expandable foam composition", step 28 of "compress cover into deflated configuration", step 29 of "package cover in deflated configuration in shipping container", step 30 of "ship to selected location", step 31 of "expand foam composition inflate pliable over and form toy", step 32 to "deliver toy to distributor", and step 33 to "sell toy to end user".

In step 20, the desired shape and dimension of the exterior cover of the toy is determined for when the toy is inflated, and can vary as desired. When a dog toy is being produced, the toy typically will be shaped like a bone, stick, or other common dog toy.

In step 21, the number of hollow compartments in the toy are defined. Since compartments in the toy will be filled, partially or completely, with expanded foam, it sometimes is desirable to utilize a plurality of separate compartments in the toy to insure that foam reaches all desired areas inside the toy cover. For example, if the toy has a body and arms and legs that extend outwardly from the body, the inner volume of the arms and legs typically will be less than the volume of the body of the toy. If an expandable foam composition is only utilized in the body of the toy, the foam may not expand sufficiently to fill the arms and legs. Accordingly, the arms and legs can be sealed from the body of the toy and a first quantity of an expandable foam composition put in one leg, a second quantity of an expandable foam composition placed in an arm, a third quantity of an expandable foam composition placed in the body, and so on. This would help to insure that each compartment of the toy is filled with foam when the foam expands.

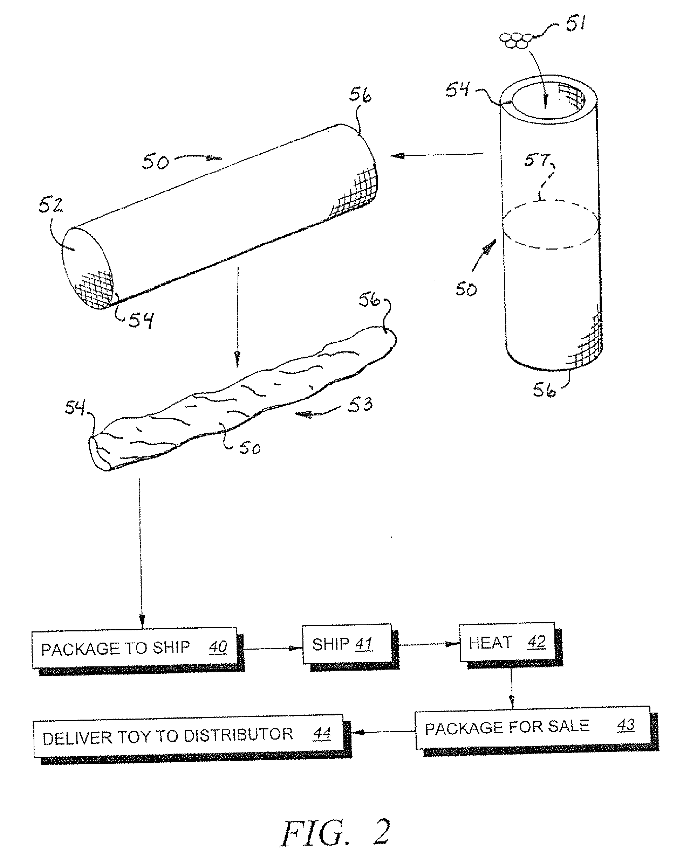

In step 22, a pliable fabric cover 50 (Fig. 2) is produced by weaving, felting, or knitting. The fabric cover 50 preferably, but not necessarily, is gas permeable. The fabric cover 50 circumscribes a gasBfilled volume, where the gas ordinarily is air.

As an alternative to step 22, in step 23 the pliable cover is formed of a gas permeable polymer.

As still another alternative to step 22, in step 24 the pliable cover is formed from a polymer that is not permeable to gas.

Any desired material can be utilized to make the pliable cover. Since, however, the toy is intended for a dog, a preferred fabric is ballistic nylon or another fabric that is more difficult for a dog to tear or destroy.

In step 25, an opening 54 (Fig. 2) is formed in the pliable cover. The opening 54 can be formed during the manufacture of the cover in steps 22 to 24, or can be formed after the cover is produced in steps 22 to 24.

In step 26, an expandable foam composition 51 (Fig. 2) is inserted through the opening formed in step 25 and inside the pliable cover to fill at least a portion of the volume circumscribed by the cover.

In step 27, the cover is stitched shut or otherwise covered so that the cover 50 extends substantially continuously around the volume within the cover. In Fig. 2, cylindrical panel member 52 is sewn over circular opening 54 in order to close opening 54. In one embodiment of the invention, one or more openings are formed in and remain in the cover so that when the foam composition expands, some of the foam composition extrudes out through the openings. This embodiment of the invention is not, however, presently preferred.

In step 28, the pliable cover is compressed into a deflated configuration 53 (Fig. 2). When the foam composition in the cover is activated, the foam causes the cover to expand. If the cover is, when in its deflated configuration, rolled up, foam produced when the foam composition is activated can cause the cover to open or unroll or unfold, possibly, by way of example and not limitation, the way the pedals of a flower bud open when the flower blooms.

In step 29, the deflated cover is packaged or placed in a shipping container.

In step 30, the shipping container is transported to a selected destination.

Once the shipping container reaches its destination, the deflated cover is removed and the foam composition 51 is activated so that the composition 51 expands, inflates, and substantially fills cover 50 to produce an inflated toy. As noted, cover 50 may include two or more separate compartments, each charged with foam composition 51 that expands to fill the compartment. The inflated toy can be wrapped or packaged for sale and then, in step 32, delivered to a distributor. The distributor sells the toy to an end user in step 33.

A specific cover 50 having a shape and dimension is depicted for purposes of illustration in Fig. 2. Cover 50 is hollow and is cylindrically shaped, and is comprises of a pliable fabric. Cover 50 includes opening 54 at one end. The other end 56 of cylindrical cover 50 is closed.

The cover 50 is charged with foam pellets 51 that, when heated, are activated and produce gas and expand into a foam that fills cover 50. After the foam pellets 51 are placed inside cover 50, panel member 52 is stitched over opening 54 to close opening 54. Foam pellets 51 presently preferably comprise a composition that is activated with heat, but the composition utilized can be activated by microwaves or any other desired means. In one embodiment of the invention, the pellets 51 (or other foam composition) are activate by microwaves. In another embodiment of the invention, cover 50 is liquid permeable and is wetted so that water contacts and activates pellets 51. After pellets produce the desired expanded foam, the cover 50 and foam are allowed to dry.

After opening 54 is closed with panel member 52, pliable cover 50 is deflated into a flatter configuration as generally illustrated by reference character 53 in Fig. 2. This typically is accomplished by compressing cover 50 so that some of the air inside cover 50 escapes outwardly through the gas permeable fabric comprising cover 50. In some case, pliable cover 50 may already be in a flattened configuration so that little, if any, compression is required to flatten or compress cover 50 to facilitate packaging 40 (Fig. 2) the cover 50 in a shipping container. When cover 50 is in a deflated configuration, this facilitates shipping larger quantities of cover 50 to intended destination because cover(s) 50 would, if inflated, occupy substantially more space in a shipping container. The cover 50 is shipped 41, and is, after the shipping container reaches its desired destination, heated 42 to activate the foam pellets 51 to produce foam and inflate cover 50 to produce the desired inflated toy. The inflated toy can then, if desired, be packaged for sale 43 and delivered 44 to a distributor for sale to an end user or, if the distributor is a wholesaler, to a retailer for sale to the end user.

One particularly desirable feature of the method of Figs. 1 and 2 is that a mold is not required to make the dog toy.

In an alternate embodiment of the invention, the foam composition in a cover 50 is activated and expands to produce a dog toy prior to shipping the toy in step 30. In this embodiment of the invention, the inflated cover 50 is not compressed into a deflated configuration 28, although if the foam inside cover 50 is resilient, it is possible that the cover 50 can be compressed to a certain extent.

In one embodiment of the invention, composition 51 is applied to the inner side of cover 50 by heat bonding/thermoforming or co-extrusion. Consequently, in this embodiment of the invention, step 26 is accomplished during the formation of a cover 50; namely, because when cover 50 is constructed, the inner side of cover 50 (and the composition 51 formed on the inner side of cover 50) faces inwardly toward and contacts the volume circumscribed by cover 50.

The foam composition 51 used to charge a cover 50 can vary as desired and can be in a solid, semi-solid, or liquid form. Pre-cast solid pellets are presently preferred. When cover 50 comprises a pliable fabric, a solid foam composition 51 is preferred. Composition 51 is be activated by heat, time, pressure, moisture, or any other desired mechanism. When composition is activated by heat, the activation temperature can vary as desired but is ordinarily greater than normal ambient temperatures, in part because when deflated covers 50 are being shipped during step 30 in Fig. 2, it is important to prevent the accidental activation of the composition 51. On the other hand, it is desirable not to have the activation to high, this in order to prevent damage to a fabric or polymer used to produce cover 50.

The activation preferably permits a composition to expand and cure. Compositions 51 are available which will, when activated, expand from 0 to 1500 percent. Compositions 51 which expand to a greater degree generally produced a final cured foam that are light in weight per unit volume than are compositions which expand to a lesser degree.

By way of example, composition 51 can comprise an epoxy-based material and may include an ethylene copolymer or terpolymer. L & L Products of Romeo, Michigan produces such compositions 51 under the designations L5206, L5207, L5208 and L5209. Such compositions 51 are usually processed initially as thermoplastic materials prior to curing. After curing, the resulting foams usually becomes thermoset materials. Other possible materials include, without limitation, polyurethane materials, phenoxy materials, copolymers and terpolymers with at least one monomer type of an alpha-olefin, polyolefin material, and phenol/formaldehyde materials. Such materials can produce foams with good corrosion and humidity resistance, high stiffness, and high strength. As noted, material which produce elastic and resilient foams can also be utilized.

It is presently preferred that composition 51 be heat-activated and, when activated, expand and cure by foaming (i.e., producing gas) and undergoing cross-linking reactions. While the resulting cured foam composition can be elastic and resilient, it is also preferred that the cured foam composition be rigid, or substantially rigid so as to improve the structural strength of the resulting dog toy or other animal toy.

As would be appreciated by those of skill in the art, a variety of objects other than pet toys can be fabricated utilizing the method of the invention. Such objects could include, for example, life preservers, life rafts, furniture cushions, dog beds, and camping beds. In addition, a sheet or panel of cloth or other material can be provided on one or both sides with a coating of a foam composition that will, when activated, expand in a direction outwardly away from the layer of cloth. Such a cloth-foam laminate could be used as insulation or sound-proofing in a house, as one or more walls of a tent, as an emergency blanket, etc.

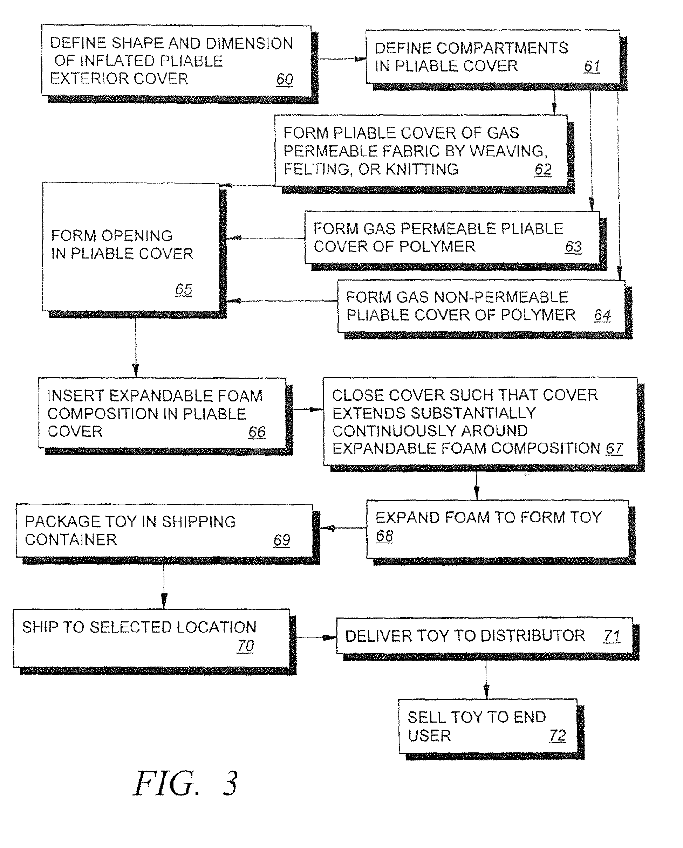

When a new foam filled toy is produced, in particular a toy with a relatively stiff foam core, the shape and dimension of the toy, including the shape and dimension of the core, is designed first, after which the mold necessary to produce the foam core is designed and built. Such a mold typically costs at least $10,000.00 to $15,000.00 and requires about thirty days to build. Further, the production of a foam core using the mold can require a longer than hoped for period of time because the foam core can require ten to fifteen minutes to cure before it can be removed from the mold. And, recouping the cost of the mold can require the sale of thousands of units of the toy. The embodiment of the invention illustrated in Fig. 3 provides a way to produce rapidly a new toy without having to incur the cost of constructing and utilizing a mold. The method of Fig. 3 includes the steps of "define shape and dimension of inflated pliable exterior cover" 60, "define compartments in pliable cover" 61, "form pliable cover of gas permeable fabric by weaving, felting, or knitting" 62, "form permeable pliable cover of polymer" 63, "form gas non-permeable pliable cover of polymer" 64, "form opening in pliable cover" 65, "insert expandable foam composition in pliable cover" 66, "close cover such that cover extends substantially continuously around expandable foam composition" 67, "expand foam to form toy" 68, "package toy in shipping container" 69, "ship toy to selected location" 70, "deliver toy to distributor", and "sell toy to end user" 72.

In step 60, the desired shape and dimension of the exterior cover of the toy is determined for when the toy is inflated, and can vary as desired. When a dog toy is being produced, the toy typically will be shaped like a bone, stick, or other common dog toy.

In step 61, the number of hollow compartments in the toy are defined. Since compartments in the toy will be filled, partially or completely, with expanded foam, it sometimes is, as discussed above, desirable to utilize a plurality of separate compartments in the toy to insure that foam reaches all desired areas inside the toy cover.

In step 62, a pliable fabric cover is produced by weaving, felting, or knitting. The fabric cover preferably, but not necessarily, is gas permeable. The fabric cover circumscribes a gas-filled volume, where the gas ordinarily is air.

As an alternative to step 62, in step 63 the pliable cover is formed of a gas permeable polymer.

As still another alternative to step 62, in step 64 the pliable cover is formed from a polymer that is not permeable to gas.

Any desired material can be utilized to make the pliable cover. Since, however, the toy is intended for a dog, a preferred fabric is ballistic nylon or another fabric that is more difficult for a dog to tear or destroy.

In step 65, an opening is formed in the pliable cover. The opening can be formed during the manufacture of the cover in steps 62 to 64, or can be formed after the cover is produced in steps 62 to 64.

In step 66, an expandable foam composition is inserted through the opening formed in step 65 and is inserted inside the pliable cover to fill at least a portion of the volume circumscribed by the cover.

In step 67, the cover is stitched shut or otherwise covered so that the pliable cover extends substantially continuously around the volume within the cover. In one embodiment of the invention, one or more openings are formed in and remain in the cover so that when the foam composition expands, some of the foam composition extrudes out through the openings. This embodiment of the invention is not, however, presently preferred.

In step 68, the foam composition is expanded to form an inflated toy. A great virtue of this embodiment of the invention is that as soon as a new toy is designed, the fabric cover can be immediately produced, an opening formed (if necessary) in the cover, an expandable foam composition placed in the cover, the opening sealed, and the foam activated to cause it to expand and fill the fabric cover. There is no waiting period to permit a mold to be designed, constructed, and operated. As described above in connection with another embodiment of the invention, after the fabric cover is charged with the expandable foam composition, the cover can be transported to another desirable location before the foam composition is activated and expanded.

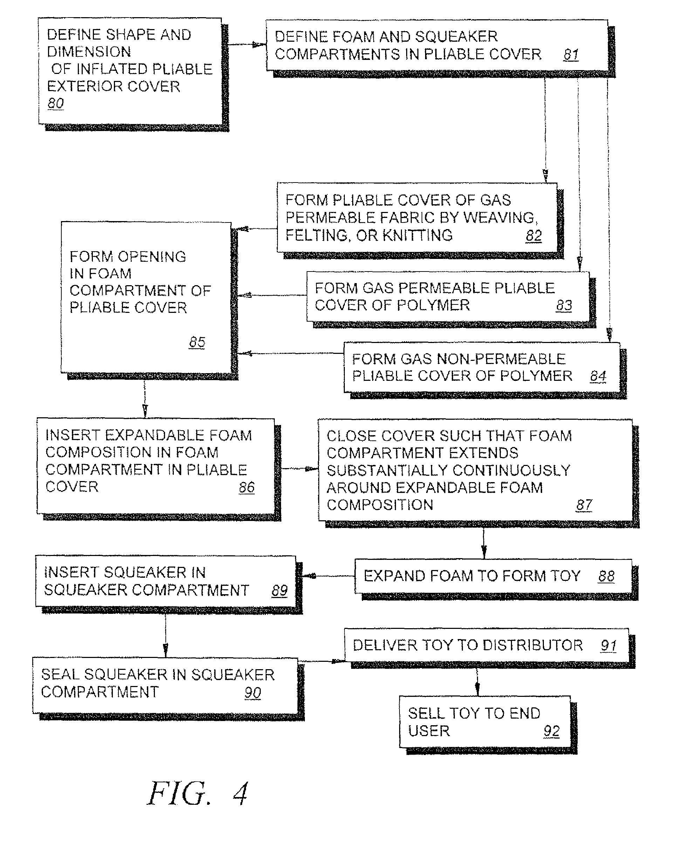

The embodiment of the invention illustrated in Fig. 4 includes the steps of "define shape and dimension of inflated pliable exterior cover" 80, "define foam and squeaker compartments in pliable cover" 81, "form pliable cover of gas permeable fabric by weaving, felting, or knitting" 82, "form permeable pliable cover of polymer" 83, "form gas non-permeable pliable cover of polymer" 84, "form opening in foam compartment of pliable cover" 85, "insert expandable foam composition in foam compartment in pliable cover" 86, "close cover such that foam compartment extends substantially continuously around expandable foam composition" 87, "expand foam to fill foam compartment" 88, "insert squeaker in squeaker compartment" 89, Aseal squeaker in squeaker compartment" 90, "deliver toy to distributor" 91, and "sell toy to end user" 92.

In step 80, the desired shape and dimension of the exterior cover of the toy is determined for when the toy is inflated, and can vary as desired. When a dog toy is being produced, the toy typically will be shaped like a bone, stick, or other common dog toy.

In step 81, the hollow compartments in the toy are defined and includes a foam compartment and a squeaker compartment. The foam and squeaker compartments are, in this embodiment of the invention, separate from each other in the event the foam composition becomes too warm and can damage the squeaker, or in the event the chemical composition or other physical property of the foam composition or foam produced by the composition will damage the squeaker. Since the foam compartments in the toy will be filled, partially or completely, with expanded foam, it sometimes is, as discussed above, desirable to utilize a plurality of separate foam compartments in the toy to insure that foam reaches all desired areas inside the toy cover.

In step 82, a pliable fabric cover is produced by weaving, felting, or knitting. The fabric cover preferably, but not necessarily, is gas permeable. The fabric cover circumscribes a gas-filled volume, where the gas ordinarily is air.

As an alternative to step 82, in step 83 the pliable cover is formed of a gas permeable polymer.

As still another alternative to step 82, in step 84 the pliable cover is formed from a polymer that is not permeable to gas.

Any desired material can be utilized to make the pliable cover. Since, however, the toy is intended for a dog, a preferred fabric is ballistic nylon or another fabric that is more difficult for a dog to tear or destroy.

In step 85, an opening is formed in the foam compartment of the pliable cover. The opening can be formed during the manufacture of the cover in steps 82 to 84, or can be formed after the cover is produced in steps 82 to 84.

In step 86, an expandable foam composition is inserted through the opening formed in step 85 and into the foam compartment of the pliable cover to fill at least portion of the volume circumscribed by the foam compartment.

In step 87, the cover is stitched shut or otherwise covered so that the portion of the pliable cover comprising the foam compartment extends substantially continuously around the volume within the foam compartment. In one embodiment of the invention, one or more openings are formed in and remain in the portion of the cover comprising the foam compartment so that when the foam composition expands, some of the foam composition extrudes out through the openings. This embodiment of the invention is not, however, presently preferred.

In step 88, the foam composition in the foam compartment is expanded to form an inflated toy.

In step 89 a squeaker is inserted in the squeaker compartment. In step 90 the squeaker is sealed in the squeaker compartment. This can be accomplished by stitching the squeaker compartment closed, by filling the squeaker compartment with foam, etc. or by any other desired means. When the squeaker is sealed in the squeaker compartment, one end of the squeaker can, if desired be positioned in an access opening in the fabric cover and in communication with ambient air. This often is desirable when the squeaker functions by drawing air into and expelling air from a bladder that comprises a portion of the squeaker. If, on the other hand, the squeaker is an electronic device that is activated by motion or when foam surrounding the squeaker is compressed, then providing an access opening in the fabric cover in the toy may not be necessary and the squeaker can be completely surrounded and enclosed by foam or another solid material or gas that fills the squeaker compartment.

In step 91 the toy is delivered to a distributor, after which the toy is sold 92 to an end user.

As would be appreciated by those of skill in the art, any toy containing expandable foam in a hollow compartment can also include a hollow compartment(s) in which there is no expandable foam, and/or can include a portion(s) which is not hollow.

Having described my invention in such terms as to enable those of skill in the art to make and use the invention, and having described the preferred embodiments and best mode thereof, I Claim:

## Claims

1. A method for rapidly producing and distributing a new toy comprising the steps of
(a) designing a new dog toy by defining the shape and dimension of an inflated pliable exterior cover;
(b) producing, as soon as step (a) is completed and without requiring the design and construction of a mold, at least one thousand units of said new dog toy in a single day by, for each of said units:
(i) forming a substantially continuous pliable cover of a gas permeable fabric, said cover generally circumscribing and enclosing a volume of gas;
(ii) forming an opening in said pliable cover;
(iii) inserting an expandable foam composition in said hollow pliable cover;
(iv) closing said opening such that said pliable cover extends substantially continuously around said expandable foam composition to produce an inflatable toy;
(v) expanding said foam composition to inflate said pliable cover to produce an inflated toy;
(c) placing said inflated toys in at least one shipping container;
(d) shipping said container to a selected destination;
(e) delivering said inflated toys to a distributor; and
(f) selling said inflated toys to at least one end user.
